## Europäisches Patentamt
## European Patent Office
## Office européen des brevets

(11) Veröffentlichungsnummer: **0 064 759**
**A2**

(12) ## EUROPÄISCHE PATENTANMELDUNG

(21) Anmeldenummer: **82104048.2**

(22) Anmeldetag: **10.05.82**

(51) Int. Cl.³: **G 06 F 13/00**

(30) Priorität: **12.05.81 DE 3118818**

(43) Veröffentlichungstag der Anmeldung:
**17.11.82 Patentblatt 82/46**

(84) Benannte Vertragsstaaten:
**AT FR GB IT NL**

(71) Anmelder: **SIEMENS AKTIENGESELLSCHAFT Berlin und München**
**Postfach 22 02 61**
**D-8000 München 22(DE)**

(72) Erfinder: **Both, Rüdiger, Dr.**
**Guardinistrasse 143**
**D-8000 München 70(DE)**

(72) Erfinder: **Geissdörfer, Werner, Dipl.-Ing.**
**Iblherstrasse 2 a**
**D-8000 München 83(DE)**

(72) Erfinder: **Hillemann, Ralf, Dipl.-Ing.**
**Gerhart-Hauptmann-Ring 1**
**D-8000 München 83(DE)**

(54) Verfahren und Schaltungsanordnung zur Übermittlung einer Anforderung eines Prozessors an einen Speichermodul in einem Multiprozessorsystem mit mehreren Speichermoduln.

(57) Um gegenseitige Behinderungen von Prozessoren beim Zugriff zum Arbeitsspeicher in einem Multiprozessorsystem mit unabhängig adressierbaren Speichermoduln über einen gemeinsamen Verbindungsknoten zu verringern, wird eine von einem Prioritätsnetzwerk ausgewählte Zugriffsanforderung eines Prozessors mit der relativ höchsten Priorität mit Hilfe der von den Speichermoduln ausgegebenen Belegungsinformation unverzüglich daraufhin überprüft, ob sie zu einem freien Speichermodul führt. Bei einem positiven Prüfungsergebnis erfolgt erst dann die Übertragung der Anforderungsparameter und Daten. Bei einem negativen Prüfungsergebnis wird der Verbindungsknoten, insbesondere dessen Prioritätsnetzwerk für Anforderung weiterer Prozessoren freigegeben.

FIG 1

0064759

SIEMENS AKTIENGESELLSCHAFT
Berlin und München

Unser Zeichen
VPA 81 P 2048 E

Verfahren und Schaltungsanordnung zur Übermittlung
einer Anforderung eines Prozessors an einen Speichermodul in einem Multiprozessorsystem mit mehreren Speichermoduln.

Die Erfindung bezieht sich auf ein Verfahren nach dem
Oberbegriff des Patentanspruchs 1 und auf eine Schaltungsanordnung zur Durchführung des Verfahrens.

Multiprozessor-Anlagen sind in der Regel mit mehreren
Speichermoduln ausgestattet, wobei das zugehörige Verbindungssystem so ausgebildet ist, daß jeder Prozessor
zu jedem Speichermodul zugreifen kann. Aus Aufwandsgründen wird nur eine begrenzte Zahl von Verbindungsknoten
zur Wegedurchschlatung realisiert, häufig steht nur ein
Verbindungsknoten zur Verfügung.

Ein solcher Verbindungsknoten besteht gewöhnlich aus
Einrichtungen zur Durchschaltung von Anforderungsparametern, wie Modussignalen und Speicheradressen, sowie
von Schreib- bzw. Lesedaten und aus einem Prioritätsnetzwerk, das beim Vorliegen von Anforderungen mehrerer
Prozessoren eine Anforderung nach einem bestimmten Algorithmus zur Durchschaltung auswählt. Im einfachsten Fall
geschieht das nach festen, stets gleichbleibenden Prioritäten für die einzelnen Prozessoren. Geeignete Prioritätsnetzwerke, sogenannte Prioritätsenkoder sind als Standardbausteine im Handel erhältlich. Hat sich das Prioritätsnetzwerk für die Anforderung eines bestimmten Prozessors entschieden, so wird die Durchschaltesteuerung
belegt und der Prozessorzugriff zu dem adressierten
Speichermodul durchgereicht. Nun besteht natürlich die
Möglichkeit, daß dieser Speichermodul anderweitig in Anspruch genommen ist. In diesem Fall bleibt der Verbindungsknoten belegt,

She 1 Fdl/11.5.1981

BAD ORIGINAL

bis der Speichermodul frei wird. Die Anforderung eines anderen Prozessors wird zurückgestellt, obwohl der von ihm gewünschte Speichermodul möglicherweise frei ist.

Der Erfindung liegt die Aufgabe zugrunde, ein Verfahren der eingangs genannten Art anzugeben, das geeignet ist, die gegenseitigen Behinderungen der Prozessoren beim Zugriff zum Arbeitsspeicher auf ein Minimium zu beschränken und vor allem die durch die augenblickliche Belegung des von einem Prozessor angeforderten Speichermoduls entstehenden Wartezeiten für die anderen Prozessoren zu verhindern. Weiter soll eine Anordnung zur Durchführung des Verfahrens vorgestellt werden.

Die erfindungsgemäße Lösung dieser Aufgabe ist dem kennzeichnenden Teil der Patentansprüche 1 und 2 zu entnehmen.

Im folgenden wird die Erfindung anhand eines Ausführungsbeispieles unter Zuhilfenahme der Zeichnung näher beschrieben. Es zeigt darin:

Fig. 1 eine Übersicht über die im vorliegenden Fall wichtigsten Verbindungen zwischen mehreren Prozessoren und Speichermoduln,

Fig. 2 und 3 die erfindungsgemäße Schaltungsanordnung zur Übermittlung von Anforderungen und

Fig. 4 eine Ergänzung der Schaltungsanordnung nach Fig. 2 und 3.

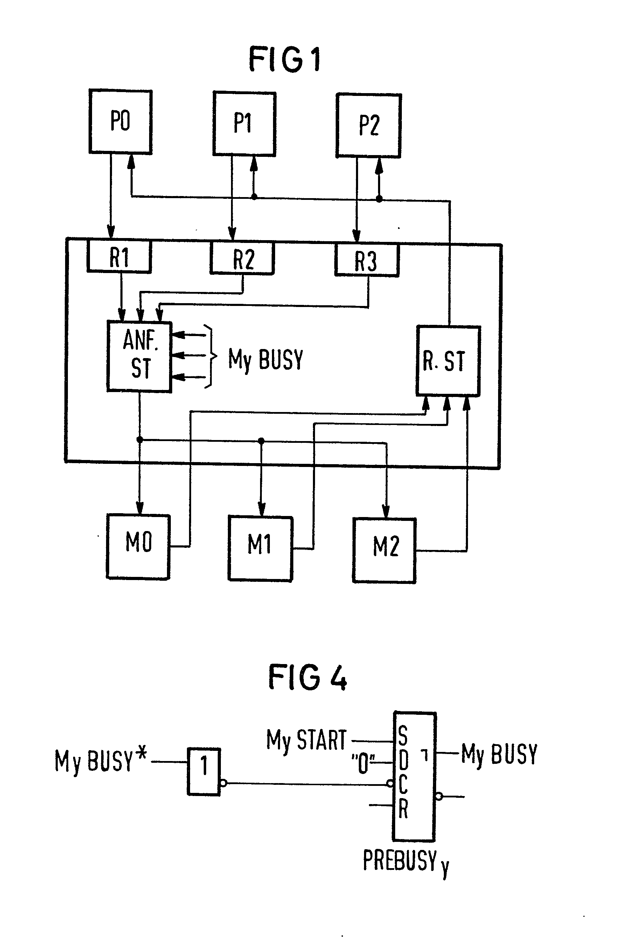

Die Darstellung in Fig. 1 geht willkürlich davon aus, daß drei Prozessoren P0 bis P2 zu drei Speichermoduln M0 bis M2 zugreifen können. Jedem Prozessor ist ein Register R0 bis R2 zur Zwischenspeicherung der schon erwähnten Zugriffs- oder Anforderungsparametern und der Schreibdaten zugeordnet. Sollen, wie üblich, Speicherzugriffe mit fortlaufenden Adressen (streaming) möglich sein, sind im allgemeinen mehrere solcher Register hintereinander vorgesehen. Das gilt vor allem dann, wenn die Prozessoren die Daten schneller ausgeben als ihre Eingabe in den Speichermodul erfolgt.

Eine weitere logische Ebene wird durch die Verbindungssteuerungen gebildet. Hierunter fallen die Anforderungssteuerung ANFST. und eine Übertragungssteuerung RST, welche die Übermittlung der Lesedaten aus den Speichermoduln MO bis M2 zu den Prozessoren PO bis P2 regelt. Der Anforderungssteuerung zugerechnet sind auch Multiplexeranordnungen zur Durchschaltung der Anforderungsparameter und der Schreibdaten. Auf die genannten Übertragungseinrichtungen soll im folgenden nicht näher eingegangen werden. Es genügt festzuhalten, daß die Wegedurchschaltung zwischen dem anfordernden Prozessor und dem von ihm durch bestimmte signifikante Adressenbits adressierten Speichermodul nur dann erfolgt, wenn dieser auch verfügbar, d. h. nicht anderweitig belegt ist.

Jeder der zu einem Multiprozessorsystem zusammengeschlossenen n Prozessoren kennzeichnet seine Absicht, zum Speicher zuzugreifen, durch ein Signal Px STROBE (x = 0...n-1). Es wird davon ausgegangen, daß dieses Signal stets von einer Adresse begleitet ist, die neben einem modulinternen Speicherplatz den gewünschten Speichermodul My (y = 0...k-1) selbst aus der Gesamtzahl k der vorhandenen Speichermoduln auswählt. Weiter wird vorausgesetzt, daß jeder Speichermodul My ein Signal MyBUSY zur Anzeige seines Belegungszustandes aussenden kann.

Das Anforderungssignal Px.STROBE eines Prozessors Px wird einem Prioritätsnetzwerk zugeleitet, das die Aufgabe hat, beim gleichzeitigen oder nahezu gleichzeitigen Eintreffen von Anforderungssignalen mehrerer Prozessoren den Vorrang eines Anforderungssignals festzustellen. Weist sich der von dem allein anfordernden bzw. ausgewählten Prozessor gewünschte Speichermodul als belegt, was sich anhand der von den Speichermoduln gelieferten Belegungsinformationen leicht erkennen läßt, dann wird gemäß der Erfindung der Zugang des Anforderungssignals dieses Prozessors zum Prioritätsnetzwerk gesperrt. Damit besteht die Möglichkeit, daß sich nun die schon ursprünglich vorliegenden oder inzwischen eingegangenen Anforderungen weiterer Prozessoren unverzüglich durchsetzen können.

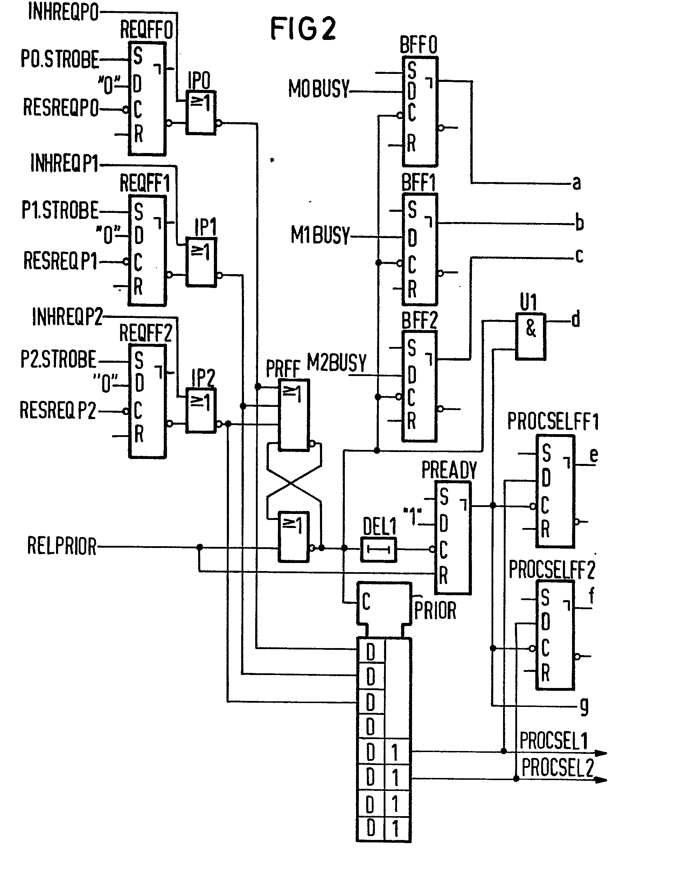

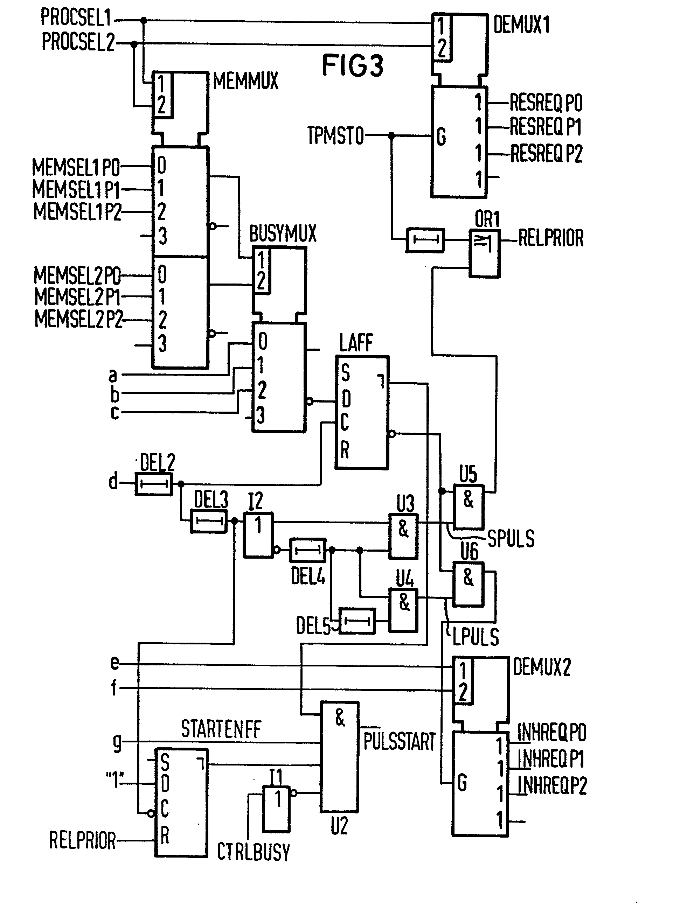

Eine für die Ausführung der geschilderten Maßnahmen geeignete Schaltungsanordnung ist in den Figuren 2 und 3 dargestellt. Die zwischen den Schaltungsteilen in Fig. 2 und 3 übergreifenden Verbindungslinien sind zur leichteren Erkennbarkeit ihrer Zusammengehörigkeit mit Kleinbuchstaben bezeichnet. Einige weitere Verbindungen sind aus Gründen der besseren Übersicht nicht eingezeichnet. Die Zusammengehörigkeit der entsprechenden Anschlußpunkte ist durch ihre übereinstimmende Kennzeichnung mit Signalnamen erkennbar.

Jedem der (in Fig. 2 nicht dargestellten) Prozessoren PO bis P2 ist eine Anforderungskippstufe zugeordnet, deren Setzeingang den Eingang für das betreffende Anforderungssignal PO.STROBE, P1.STROBE bzw. P2.STROBE des betreffenden Prozessors bildet. Die Anforderungskippstufen REQFFO bis REQFF2 sind, wie alle weiteren Kippstufen, die nicht ausdrücklich davon ausgenommen sind, sogenannte Master-Slave-Flipflops, bei denen die einzugebende Information am Ausgang erst mit der abfallenden Flanke eines positiven Übernahmetaktimpulses erscheint. Da die eingesetzten Master-Slave-Flipflops, wie aus der Zeichnung ersichtlich ist, Eingänge für inverse Übernahmetaktimpulse besitzen, erfolgt die Einstellung der Ausgänge auf die am Dateneingang anliegende Information bei positiven Flanken der Übernahmeimpulse.

Die invertierenden Ausgänge der Anforderungskippstufen REQFF0 bis REQFF2 sind mit den Eingängen von NOR-Gliedern IP0 bis IP2 verbunden. An den anderen Eingängen der NOR-Glieder IP0 bis IP2 liegen die Signale INHREQP0 bis INHREQP2 an, auf deren Herleitung und Bedeutung noch näher eingegangen wird. Zunächst sei angenommen, daß diese Signale den binären Wert "0" haben. Die Ausgänge der NOR-Glieder IP0 bis IP2 sind mit den Setzeingängen einer in bekannter Weise aus zwei über Kreuz rückgekoppelten NOR-Gliedern gebildeten RS-Kippstufe PRFF und mit den Datenéingängen D eines Prioritätsnetzwerkes PRIOR verbunden. Das für das Rücksetzen der RS-Kippstufe PRFF vorgesehene Signal RELPRIOR möge zunächst den binären Wert "0" haben und die Kippstufe PRFF somit nicht beeinflussen.

Das Setzen der Kippstufe PRFF durch das zuerst eingetroffene Anforderungssignal, beispielsweise durch das Signal P0.STROBE, löst eine Reihe von Vorgängen aus. Zunächst sei hier zu nennen das Aktivieren des Prioritätsnetzwerkes PRIOR und das Verriegeln seiner Dateneingänge D. Bei zwei oder mehr gleichzeitig oder innerhalb einer durch die Signallaufzeit in der Kippstufe PRFF bestimmten Zeitspanne nacheinander eingegangenen Anforderungssignale wählt das Prioritätsnetzwerk PRIOR das Anforderungssignal des Prozessors mit der höchsten Priorität aus. Liegt nur ein Anforderungssignal vor, dann wird selbstverständlich dieses als bevorrechtigt anerkannt. Das Prioritätsnetzwerk PRIOR gibt das Entscheidungsergebnis, d. h. die Nummer des ausgewählten Prozessors nach einer gewissen Signallaufzeit an seinen Ausgängen in binärer Verschlüsselung in Form der beiden Bits PROCSEL1 und PROCSEL2 ab.

Das Setzen der RS-Kippstufe PRFF bewirkt nach einer

durch das Laufzeitglied DEL1 verursachten Verzögerungszeit $\tau 1$ das Durchschalten des am Dateneingang D einer weiteren Kippstufe . PREADY als festes Potential anliegenden binären Wertes "1" auf deren Ausgang. Damit wird die Prozessorauswahl durch das Prioritätsschaltwerk PRIOR als gültig erklärt. Demgemäß wird die Verzögerungszeit $\tau 1$ so festgelegt, daß sie die Zeit zwischen der Aktivierung des Prioritätsnetzwerks PRIOR und der Entstehung entsprechender Ausgangssignale PROCSEL1 und PROCSEL2 einschließlich einer gewissen Beruhigungszeit überbrückt. In einem praktischen Anwendungsfall beträgt sie ca. 18 ns.

Als Folge der Gültigerklärung der Entscheidung des Prioritätsnetzwerks PRIOR werden die den ausgewählten Prozessor kennzeichnenden Bits PROCSEL1 und PROCSEL2 in zwei Kippstufen PROCSELFF1 und PROCSELFF2 übernommen. Die Übernahmesteuerung erfolgt, wie aus Fig. 2 ersichtlich, durch das Ausgangssignal der Kippstufe PREADY.

Das Sezten der RS-Kippstufe PRFF veranlaßt auch die Übernahme der Signale M0BUSY bis M2BUSY in Kippstufen BFF0 bis BFF2, wobei jedem Speichermodul M0 bis M2 eine solche Kippstufe zugeordnet ist. Wie schon erwähnt wurde, geben die Signale M0BUSY bis M2BUSY Auskunft über den augenblicklichen Belegungszustand der Speichermoduln. Sie führen den binären Wert "1", wenn der betreffende Speichermodul eine kurz vorher begonnene Speicheroperation noch nicht beendet hat.

Es wurde auch schon darauf hingewiesen, daß jeder Prozessor, der einen Speicherzugriff anfordert, mit dem Anforderungssignal Px.STROBE die Adresse des gewünschten Speichermoduls My liefert. Diese Adresse steht sodann zusammen mit den anderen Anforderungs-

parametern in dem dem Prozessor Px zugeordneten Eingangsregister des Verbindungssystems (Fig. 1). Dabei ist zu beachten, daß bei gleichzeitigen Anforderungen mehrerer Prozessoren auch mehrere Moduladressen vorliegen, die gleich oder verschieden sein können. Die **niederwertigen** Bits MEMSEL1 P0, MEMSEL1P1 und MEMSEL1P2 der von den einzelnen Prozessoren P0 bis P2 angegebenen binär codierten Moduladressen liegen an einer ersten Gruppe von Dateneingängen und die höherwertigen Bits MEMSEL2P0, MEMSEL2P1 und MEMSEL2P2 liegen an der zweiten Gruppe von Dateneingängen eines Doppelmultiplexers MEMMUX an, der durch die Prozessorauswahlbits PROCSEL1 und PROCSEL2 gesteuert wird. Die an den beiden Ausgängen des Multiplexers MEMMUX zur Verfügung stehende Information bezeichnet somit den von dem ausgewählten Prozessor angeforderten Speichermodul. Sie dient zur Steuerung der Wegedurchschaltung in einem weiteren Multiplexer BUSYMUX.

Die Dateneingänge dieses Multiplexers BUSYMUX sind mit den Ausgängen der Kippstufen BFF0 bis BFF2 verbunden, deren Ausgangssignale, wie schon beschrieben wurde, Auskunft über die Belegungszustände der einzelnen Speichermoduln geben (MyBUSY = 1 ≙ Speichermodul My belegt). Es ist nunmehr ersichtlich, daß der jeweilige Binärwert des am invertierenden Ausgang des Multiplexers BUSYMUX abgenommenen und am Dateneingang einer Kippstufe LAFF anliegenden Signals den Belegungszustand gerade des von dem ausgewählten Prozessor adressierten Speichermoduls bezeichnet. Der Binärwert ist "1", wenn der Speichermodul frei ist.

Die Übernahme des Signals in die Kippstufe LAFF wird durch das Setzen der Kippstufe PREADY ausgelöst. Nach dem Durchgang durch das bereits mit dem Setzen der RS-Kippstufe PRFF vorbereitete UND-Glied U1 wird der maßgebliche Signalübergang am Ausgang der Kipp-

stufe PREADY    von "0" auf "1" durch ein Laufzeitglied DEL2 verzögert auf den Takteingang der Kippstufe LAFF weitergegeben. Die Verzögerungszeit $\tau 2$
gleicht die Signallaufzeit durch die Multiplexer MEMMUX
und BUSYMUX nach Gültigkeit der Entscheidungsbits PROCSEL1
und PROCSEL2 aus und beträgt etwa 6 ns.

Eine geringe Verzögerung durch ein weiteres Laufzeitglied
DEL3 mit einer Laufzeit $\tau 3$ von etwa 2 ns bewirkt, daß
erst nach der Übernahme der aktuellen Belegungsinformation
in die Kippstufe LAFF eine Kippstufe STARTENFF gesetzt
wird.

An die Ausgänge der Kippstufen STARTENFF, LAFF und PREADY
sind die Eingänge eines UND-Gliedes U2 angeschlossen,
das bei Erfüllung der UND-Bedingung ein Startsignal PULS
START zur Auslösung einer Taktimpulskette für die Steuerung
der Übertragung der Anforderungsparameter und Daten zwischen dem ausgewählten Prozessor und dem adressierten
Speichermodul abgibt. Setzt man wie bisher voraus, daß
der adressierte Speichermodul frei ist, dann ist diese
UND-Bedingung hinsichtlich der Ausgangssignale der drei
zuletzt genannten Kippstufen erfüllt. Die Ausgabe eines
wirksamen Startsignals PULSSTART erfolgt jedoch erst,
wenn auch das vierte Eingangsignal CTRLBUSY nach seiner Inversion durch den Inverter I1 den binären Wert
"1" hat. Anderenfalls bedeutet das, daß die Übertragungswege für Daten im Verbindungssystem noch anderweitig belegt sind.

Setzt man jedoch weiter voraus, daß das Startsignal
PULSSTART wirksam wird, dann wird eine Serie von Taktimpulsen erzeugt, die die Weitergabe der in dem Eingangsregister des Verbindungssystems zwischengespeicherten Anforderungsparameter zu dem adressierten Speichermodul abwickelt und die Übertragung von Daten von dem
bzw. zu dem ursprünglich allein anfordernden oder gemäß der Prioritätsentscheidung ausgewählten Prozessor veranlaßt. Der am gemeinsamen Dateneingang eines Demultiplexers DEMUX1 anliegende erste Impuls TPMST0 der ausgelösten Taktimpulskette setzt sich entsprechend der bereits nach Maßgabe der Entscheidungsbits PROCSEL1 und PROCSEL2 erfolgten Wegedurchschaltung auf den der Prozessornummer zugeordneten Ausgang durch und bildet einen der Impulse RESREQP0, RESREQP1 oder RESREQP2. Als solcher führt er zur Übernahme der an den Dateneingängen aller Anforderungskippstufen REQFF0,REQFF1 und REQFF2 fest anliegenden "0" in die Anforderungskippstufe des erfolgreichen Prozessors und stellt damit diese Kippstufe zurück. Wenig später bildet der Impuls TPMST0 am Ausgang des ODER-Gliedes OR1 das Rücksetzsignal RELPRIOR, das die Kippstufen PRFF und PREADY zurücksetzt und damit auch das Prioritätsnetzwerk PRIOR freigibt. Eine von Anfang an vorliegende Anforderung eines Prozessors mit niedrigerer Priorität oder eine inzwischen eingetroffene Anforderung können nun in der beschriebenen Weise bearbeitet werden. Die Untersuchung, ob diese Anforderung auf einen freien Speichermodul führt, läuft also schon zu einem Zeitpunkt, in dem der Datenverkehr zwischen dem vorher anfordernden Prozessor und dem von ihm angesprochenen Speichermodul noch abgewickelt wird.

Bisher wurde angenommen, daß der von dem bevorrechtigten Prozessor gewünschte Speichermodul frei war. Es sei daran erinnert, daß dies anhand der von den Speichermoduln gelieferten Belegungsinformationen MyBUSY geprüft wurde und dazu führte, daß in die Kippstufe LAFF eine binäre "1" übernommen wurde.

Die bisher getroffene Annahme kann jedoch nicht als Regelfall angesehen werden, worauf schon eingangs hingewiesen wurde. Im folgenden wird daher von der momentanen Belegung des adressierten Speichermoduls ausgegangen.

Die Belegungsinformation MyBUSY des betreffenden Speichermoduls My wird daher den binären Wert "1" haben und am invertierenden Ausgang des Multiplexers BUSYMUX als binäre "0" erscheinen. Diese "0" wird in die Kippstufe LAFF übernommen. Damit kann am Ausgang des UND-Gliedes U2 kein wirksames Signal PULSSTART entstehen.

Bevor auf die weiteren Wirkungen des Schaltzustandes der Kippstufe LAFF eingegangen wird, soll der aus dem Inverter I2 mit einem zusätzlichen nichtinvertierenden Ausgang, den Laufzeitgliedern DEL4 und DEL5 und den UND-Gliedern U3 und U4 bestehende Schaltungsteil (Fig. 3) näher betrachtet werden. Die durch das Setzen der RS-Kippstufe PRFF an deren Ausgang entstandene und durch die Laufzeitglieder DEL1, DEL2 und DEL3 bereits verzögerte ansteigende Signalflanke erreicht nach ihrem Durchgang durch den Inverter I2 den einen Eingang des UND-Gliedes U3. Die wegen der Inversion abfallende Flanke trifft dagegen an dem anderen Eingang des UND-Gliedes U3 erst nach einer durch das Laufzeitglied DEL4 erzeugten Verzögerung $\tau 4$ von beispielsweise 12 ns ein. Am Ausgang des UND-Gliedes U3 entsteht somit ein Impuls SPULS, dessen Dauer durch die Laufzeit $\tau 4$ bestimmt ist. Nach dem gleichen Prinzip wird am Ausgang des UND-Gliedes U4 ein Impuls LPULS gebildet, der infolge der nochmaligen Verzögerung der abfallenden Flanke durch das Laufzeitglied DEL5 mit der Signallaufzeit $\tau 5 = \tau 4$ doppelt so lange dauert, wie der Impuls SPULS.

Da an den ersten Eingängen der nachfolgenden UND-Glieder U5 und U6 bereits eine "1" vom invertierenden Ausgang der Kippstufe LAFF anliegt, durchlaufen die Impulse SPULS und LPULS die UND-Glieder U5 und U6. Der Impuls SPULS, am Ausgang des ODER-Gliedes OR1 als Signal RELPRIOR bezeichnet, setzt die Kippstufen PRFF und PREADY zurück, gibt damit auch das Prioritätsnetzwerk PRIOR frei und verhindert, solange er andauert, ein erneutes

Setzen der Kippstufen.

Gleichzeitig wird der am gemeinsamen Dateneingang des Demultiplexers DEMUX2 anliegende Impuls LPULS gemäß der von den Kippstufen PROCSELFF1 und PROCSELFF2 gelieferten binärcodierten Nummer des bisher bevorrechtigten Prozessors Px auf einen der Ausgänge INHREQPO bis INHREQP2 durchgeschaltet. Eines der gleichnamigen Signale sperrt das von dem vorher ausgewählten Prozessor Px zugeordnete NOR-Glied IPx und blockt die noch bestehende, weil erfolglose Anforderung dieses Prozessors von dem betreffenden Eingang des Prioritätsnetzwerkes PRIOR ab. Damit kann sich eine von Anfang an vorliegende oder inzwischen eingetroffene Speicheranforderung eines anderen Prozessors durchsetzen. Sie wird nun in der beschriebenen Weise wieder darauf untersucht, ob sie an einen freien Speichermodul gerichtet ist.

Liegt indessen eine weitere Anforderung gar nicht vor, dann kommt mit Beendigung des Impulses LPULS bzw. des Signals INHREQPx der ursprünglich anfordernde Prozessor Px wieder zum Zuge.

Da mit dem Beginn des Signals PULSSTART erst Übertragungsvorgänge im Verbindungssystem und sonstige Maßnahmen, wie beispielsweise eine Paritätsprüfung der Daten und Adressen oder Adressenmodifikationen ausgelöst werden, muß zwischen diesem Zeitpunkt und dem Start der eigentlichen Speicheroperationen eine gewisse Zeit abgewartet werden. Zu diesem Zweck wird gewöhnlich ein Taktimpuls aus dem mittleren Bereich der durch das Signal PULSSTART ausgelösten Taktimpulskette als Startsignal MySTART für den Beginnder Speicheroperationen benutzt. Da zu dieser Zeitverzögerung noch beträchtliche Signallaufzeiten auf den Verbindungsleitungen zum Speicher hinzu kommen, besteht die Gefahrt, daß bei der folgenden Übernahme der Belegungsinformation in die Kippstufen BFFO bis BFF2 ein Speichermodul noch als frei angezeigt wird, obwohl er aufgrund der unmittelbar vorher überprüften Anforderung als bereits belegt zu gelten hat.

Um das zu vermeiden, ist jedem Speichermodul eine weitere Kippstufe PREBUSYO bis PREBUSY2 zugeordnet, die durch das Startsignal MySTART für die Speicheroperation des betreffenden Speichermoduls My gesetzt wird. Wie die Fig. 4 zeigt, wird die Kippstufe PREBUSYy durch die Rückflanke des aus dem Speichermodul My stammenden Belegungssignals MyBUSY* zurückgesetzt. Die am Ausgang der Kippstufe PREBUSYy anliegende Belegungsinformation MyBUSY stellt somit mindestens teilweise eine Vorausinformation dar. Sie wird gemäß Fig. 2 weiter verwendet.

Das anhand der Fig. 2 und 3 ausführlich beschriebene Schaltungsbeispiel für drei Prozessoren und drei Speichermoduln kann ohne sonstige Änderungen auch für vier Prozessoren und/oder Speichermoduln eingesetzt werden, wenn nur die den Prozessoren und Speichermoduln unmittelbar zugeordneten Schaltungselemente wie Kippstufen REQFFx NOR-Glieder IPx und Kippstufen BFFy entsprechend ergänzt werden.

Aus der vorstehenden Beschreibung ist aber auch ohne weiteres zu entnehmen, wie vorzugehen ist, wenn eine andere Mehrzahl von Prozessoren und Speichermoduln vorgegeben sind. Selbstverständlich darf die Anzahl der Prozessoren von der Anzahl der Speichermoduln abweichen.

4 Figuren
3 Patentansprüche

Patentansprüche

1. Verfahren zur Übermittlung einer von einer Speicheradresse begleiteten Anforderung eines Prozessors an einen Speichermodul in einem Multiprozessorsystem mit mehreren unabhängig adressierbaren Speichermoduln, wobei ein Prioritätsnetzwerk gegebenenfalls aus gleichzeitig vorliegenden Anforderungen mehrerer Prozessoren, die Anforderung des Prozessors mit der jeweils höchsten Priorität zur Durchschaltung auswählt, d a d u r c h g e k e n n z e i c h n e t,

a) daß unmittelbar nach der Auswahl der Anforderung eines bestimmten Prozessors (Px) der Belegungszustand des von dem Prozessor (Px) adressierten Speichermoduls (My) mit Hilfe einer von dem Speichermodul (My) abgegebenen Belegungsinformation (MyBUSY) geprüft wird,

b) daß in Abhängigkeit von dem Prüfungsergebnis die Wegedurchschaltung für die Anforderungsparameter und Daten erfolgt, oder das Prioritätsschaltwerk (PRIOR) zur Auswahl der Anforderung eines weiteren Prozessors freigegeben wird,

c) daß beim Fehlen einer weiteren Anforderung die vorher geprüfte Anforderung nach einer Wartezeit reaktiviert wird.

2. Schaltungsanordnung zur Durchführung des Verfahrens nach Anspruch 1, g e k e n n z e i c h n e t durch folgende Merkmale:

a) jedem Prozessor (Px) ist eine Anforderungskippstufe (REQFFx) zugeordnet, die durch ein Anforderungssignal (PxSTROBE) setzbar und durch einen die Herstellung einer Verbindung zwischen einem anfordernden Prozessor (Px) und dem von ihm adressierten Speichermodul (My) kennzeichnenden Impuls (RESREQPx) rücksetzbar ist,

b) die Ausgänge der Anforderungskippstufen (REQFFx) sind über individuelle Sperrglieder (IPx) mit den Setzeingängen einer RS-Kippstufe ( PRFF ) und mit den Dateneingängen des Prioritätsnetzwerkes (PRIOR) verbunden,

c) der durch das Setzen der RS-Kippstufe (PR FF ) erzeugte Signalübergang bewirkt die Ausgabe der Nummer des momentan bevorrechtigten Prozessors in binärer Codierung am Ausgang des Prioritätsnetzwerkes (PRIOR) sowie die Eingabe einer aus der Adresse (MEMSELPx) des von dem bevorrechtigten Prozessor (Px) angeforderten Speichermoduls (My) und aus dessen Belegungsinformation (MyBUSY) abgeleiteten Information in eine Vorgriffs-Kippstufe (LAFF), deren Schaltzustand über den Erfolg des bevorrechtigten Prozessors Auskunft gibt,

d) der eine erfolgreiche Anforderung kennzeichnende Schaltzustand der Vorgriffs-Kippstufe (LAFF) löst die Übertragung der Anforderungsparameter, eine dementsprechende Speicheroperation und die Übertragung von Daten zwischen dem bevorrechtigten Prozessor (Px) und dem angeforderten Speichermodul aus und bewirkt die Erzeugung von Impulsen zum Rücksetzen der dem bisher bevorrechtigten Prozessor (Px) zugeordneten Anforderungskippstufe (REQFFx) und der RS-Kippstufe ( PRFF ) und damit zur Freigabe des Prioritätsnetzwerkes (PRIOR),

e) der eine erfolglose Anforderung kennzeichnende Schaltzustand der Vorgriffs-Kippstufe (LAFF) bewirkt die Erzeugung eines Signals (INHREQPx) zur zeitlich begrenzten Unterbrechung der Verbindung zwischen dem Ausgang der Anforderungskippstufe des bisher bevorrechtigten Prozessors (Px) und dem Eingang der RS-Kippstufe ( PRFF ) und die Erzeugung eines Impulses zum Rücksetzen der RS-Kippstufe ( PRFF ) und damit zur Freigabe des Prioritätsnetzwerkes.

3. Schaltungsanordnung nach Anspruch 2, d a d u r c h
g e k e n n z e i c h n e t, daß die Dauer des Signals
(INHREQPx) zur vorübergehenden Blockierung einer als
erfolglos erkannten Anforderung so bemessen ist, daß
eine oder mehrere gegebenenfalls bereits vorliegende
Anforderungen von weiteren Prozessoren, insbesondere von
Prozessoren mit niedrigerer Priorität .in der Lage
sind, das Prioritätsnetzwerk (PRIOR) zu verriegeln.

FIG 1

FIG 4

0064759

2/3
FIG 2

0064759

3/3

FIG3